# EUROPEAN PATENT SPECIFICATION

(11) **EP 2 007 547 B1**
(45) Date of publication and mention of the grant of the patent: **19.05.2010**
(21) Application number: 07727297.9
(22) Date of filing: 23.03.2007
(51) Int. Cl.: B23Q 3/08, B23Q 7/02

(54) **METHOD AND APPARATUS FOR FIXING, ON A PREPARATION AND SUPPORT PLATE, WORKPIECES TO BE MACHINED BY MACHINE TOOLS**
VERFAHREN UND VORRICHTUNG ZUM BEFESTIGEN VON DURCH WERKZEUGMASCHINEN ZU BEARBEITENDEN WERKSTÜCKEN AN EINER VORBEREITUNGS- UND STÜTZPLATTE
PROCÉDÉ ET APPAREIL DE FIXATION, SUR UNE PLAQUE DE PRÉPARATION ET D'APPUI, DE PIÈCES à USINER PAR DES MACHINES-OUTILS

(30) Priority: 18.04.2006 IT BO20060295
(43) Date of publication of application: 31.12.2008
(73) Proprietor: MINGANTI INTERNATIONAL LIMITED, Dublin 2 (IE)
(72) Inventor: CALDANA, Marcus, S-531 57 Lidköping (SE)
(74) Representative: Porsia, Dino
(86) International application number: PCT/EP2007/052823
(87) International publication number: WO 2007/118761

(56) References cited:
- WO-A-03/057392
- DE-A1- 10 029 379
- DE-A1- 19 920 365
- JP-A- 61 226 203

## Description

The present invention relates to a method and an apparatus for fixing, on a preparation and support plate, workpieces to be machined by machine tools, as per the preambles of claims 1 and 2. An example of such a method and such an apparatus is disclosed by DE 199 20 365 A1.

In order to perform the high-precision machining of the inner and outer surfaces of workpieces with an annular shape, with single positioning on the chuck of a machine tool, it is known to place the said workpiece, together with its base and correctly centred, on a robust support base or plate on which the workpiece is fixed using adhesive or glue, all of which so that the same workpiece may then be positioned on the chuck of the machine tool with gripping of the said plate, while the workpiece is not subject to deformation stresses and may be machined precisely, with single positioning, over all its visible inner and outer surfaces which are accessible to the tools. After machining, the workpiece is separated from the base with neutralization of the fixing action of the adhesive which may also be chosen with characteristics suitable for this purpose. In order to separate the workpiece from the support base, hitherto many solutions have been indicated, but have not proved to be practical, secure, easy to perform and technologically reliable.

The invention aims to overcome these limitations of the prior art, by means of a method as claimed in the accompanying Claim 1 and an apparatus as claimed in the accompanying claim 2 and as per the following dependent claims. The surface for supporting the workpiece is formed by the flat top surface of an annular arrangement of small supports which are positioned with their axes parallel to that of the support base and these supports are mounted on the said base with the possibility of being operated so as to rotate about their axes. The fixing adhesive is arranged on the top surface of the said supports, which lies along an ideal flat annular rim perpendicular to and concentric with the axis of the support base and the workpiece is then placed and correctly centred on this annular surface, said workpiece, with solidification of the adhesive, being fixed on the said annular support surface and being able to be loaded together with the support base onto the machine tool for machining of its visible surfaces. After machining, the workpiece is separated from the said supports by means of an easy and rapid rotation thereof, which breaks the thin adhesive film situated in between, while the workpiece is not subject to damaging stresses.

Further characteristic features of the invention and the advantages arising therefrom will emerge more clearly from the following description of a preferred embodiment thereof, illustrated purely by way of a non-limiting example, in the figures of the accompanying plates of drawings in which:
- Fig. 1 is a top plan view of a support base with rotating supports on which the workpiece is fixed with adhesive;
- Fig. 2 shows the base according to Figure 1 sectioned along the line II-II.

In the figures, 1 denotes a support base or plate which has, for example, a coaxial plinth 101 by means of which the said base, firstly during mounting thereon of the workpiece to be machined by the machine tool, may be gripped by the gripping jaws 102 of a table 2 which is rotatable about a vertical axis Y and together with which, once mounting of the workpiece has been performed, the said base 1 may then be gripped on the chuck of the machine tool for machining the workpiece. The table 2 may be rotated about its axis manually or by means of a special servo control unit (not shown) and means may be envisaged for locking it in the angular position into which it is brought in each case.

The workpiece P usually has an annular shape and in the example in question consists of the ring, also of large diameter and with external teeth, of a thrust bearing. According to the invention, supports 3, which where necessary may be rotated about their axes A, are mounted on the base 1, equally spaced and in a parallel arrangement with respect to the axis of the said base. In the first tests carried out, the supports 3 were rotatably mounted in holes pre-formed in the base 1 so as to form with their top surface 103 an annular surface having a diameter which is correlated to that of the workpiece P, concentric with and perpendicular to the axis of the support base 1. The said supports 3 had, underneath their head 103, a configuration in the form of a cube or with at least two parallel surfaces, so as to be able, where necessary, to be gripped and rotated about their axes, using an open-ended spanner of adequate length.

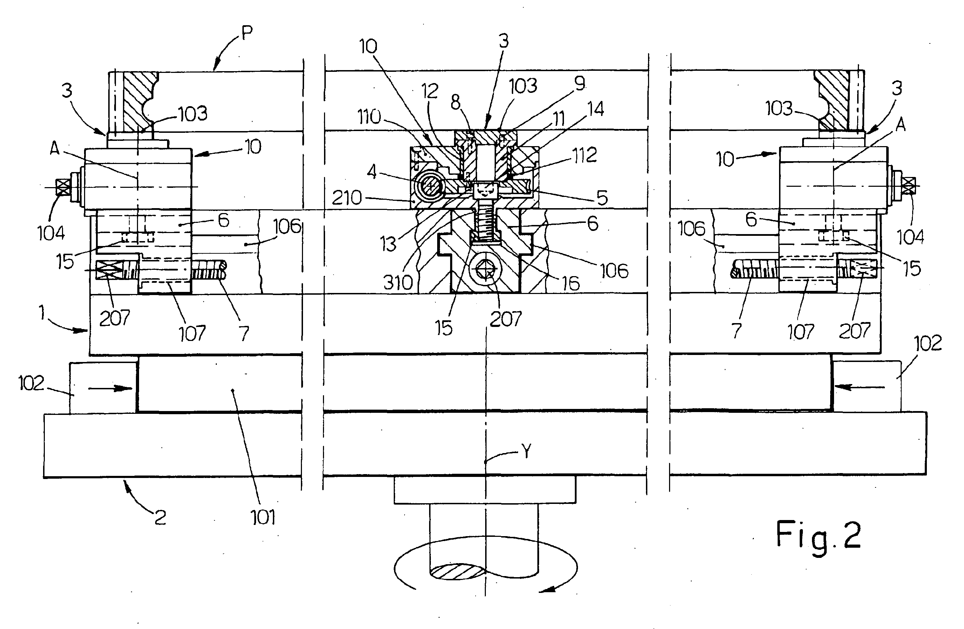

A metered and predetermined quantity of adhesive is deposited on the clean top surface 103 of the supports 3 and the bottom side of the workpiece P is then placed on this surface, said workpiece being aligned axially with precision in relation to the base 1 before the adhesive starts to set, for example by means of external reference gauges R which are designed, for example, for mounting on the base 1. or on the table 2 and for co-operation with the outer surface of the workpiece P, for example with three of these reference gauges R arranged angularly equidistant from each other at 120°. Once solidification of the adhesive for fixing the workpiece P onto the supports 3 has occurred, the clamps 102 are slackened and, using the special eyebolts of the base 1 (not shown), the said base 1 with the fixed workpiece P is removed from the table 2 and is mounted on the self-centring chuck - usually with a vertical axis - of a machine tool which will perform machining of the visible surfaces of the said workpiece P, while the base 1 with the workpiece machined during the previous cycle is positioned on the table 2, in order for the workpiece to be detached from the supports 3 of this base and replaced with a new workpiece. From Figure 2 it can be seen that the support surface 103 of the supports 3 is such as not to project from the plan-view volume of the workpiece P and that the latter is suitably spaced from the underlying wider parts of the said supports 3 so that the workpiece P may be precisely machined over the entire visible surface, without the tool interfering with the supports 3.

It must be remembered that machining of the workpieces in question on the machine tool requires a relatively long time, i.e. about 20-30 minutes, so that the step of separating and preparing a new workpiece may be performed within this sufficiently long time interval. In order to separate the machined workpiece from the supports 3, with the base 1 fixed on the table 2, it is envisaged to impart to the said supports 3 which are suitably designed in this connection, as mentioned above, a rotation about their axes A so as to break easily the bond formed by the thin adhesive fixing film, owing also to the small area of the top surface 103 of each support 3. During this step the workpiece is not subject to any damaging or negative stresses. The separating operation may be performed manually by the operator who uses a spanner in order to rotate the supports 3 which are suitably designed for such an engaging manoeuvre, or may be performed mechanically, making use of rotation of the table 2 in order to position the appropriate mechanical interfaces of the said supports 3 (see below) in relation to one or more rotational actuators Z which are located statically outside the table 2.

Once separation of the workpiece P from the supports 3 has been performed, making use of rotation of the table 2, it is possible to position progressively the surface 103 of the supports 3 in relation to at least one station (not shown) which performs cleaning of said surface of the supports, in order to remove from the latter any residual adhesive used during the previous step, following which a suitable amount of adhesive is positioned on this cleaned surface of the supports 3 by means of one or more stations (not shown) with respect to which the supports 3 may be positioned by means of rotation of the table 2, following which the cycle described for fixing and centring a new workpiece P on the supports 3 is repeated.

A possible mode of designing and fastening supports 3 onto the base 1 is now described purely by way of a non-limiting example, said supports 3 being able to be operated by means of the said automatic rotating station Z and being mounted on means which allow a variation in the distance of these supports from the centre of rotation of the base 1, in order to support workpieces P with a different diameter.

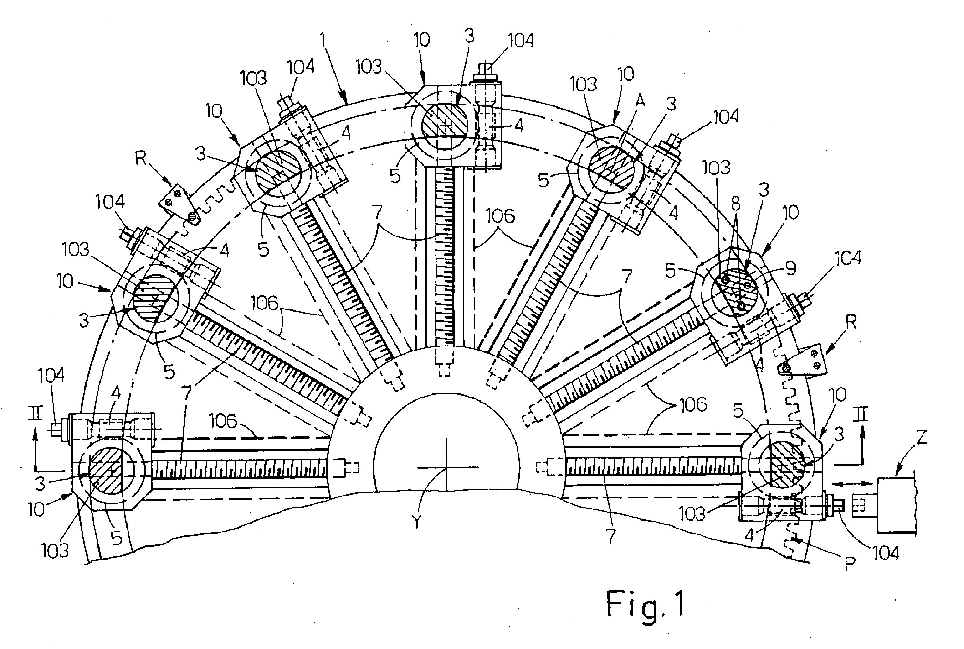

From the figures it can be seen that the supports 3 are each formed by the output shaft of a small reduction unit 10 which comprises worm 4 and helical gear 5 and which is fixed with its body 210 on a slide 6 which slides precisely inside straight guides 106 arranged radially on the base 1 and which may be slid or locked in these guides by means of a system comprising screw nut 107, situated inside the slide 6, and screw 7, arranged in a parallel manner inside the guides 106, supported rotatably by the base 1 and provided at the end with a head 207 for connection to a rotating crank. The screws 7 and/or the guides 106 may be protected by special bellows or using other suitable means, which are not shown since they can be deduced by persons skilled in the art. The base 1 will be provided with metric scales (not shown) with which reference gauges which are fixed to the slides 6 or to the body of the reduction unit mounted on the latter co-operate, in order to display the radial position of the various reduction units with the associated rotating supports 3. It is also possible to use, for rotation of the screws 7, the same actuator Z according to Figure 1 which is used to operate the head 104 of the screws 4 of the reduction units 10, in order to separate the machined workpiece.

From the detail shown in Figure 2 it can be seen that each support 3 is formed by a disc of suitable thickness with a shape, in plan view, in the form of a circle segment, which by means of a pair of screws 8 and a centring pin 9 is removably fixed onto the top end of a hollow shaft 11 which is able to rotate with precision and with a low coefficient of friction inside a bush 12 or other suitable means placed inside a seat of the cover 110 of the reduction unit 10. The hollow shaft 11 projects by a small amount from the bottom of the bush 12 so as to be able to mount thereon a ring 112 with a low coefficient of friction, which rests on the bottom end of the said bush and against which the helical gear 5 is pressed by screws 13 which fix it to the said hollow shaft 11. The gear 5 is also axially hollow so that, when the upper disc 3 is not present, it is possible to engage a spanner with the socket head of a screw 14 which passes through a hole provided in the bottom of the body 210 of the reduction unit and is screwed into a hole of a plug 15 seated in the widened base of a guide groove 16 which has the form of an overturned T and is formed in the slide 6 and which at the top is engaged by a linear, bottom, raised part 310 of the body of the reduction unit 10.

Since the step of cleaning the active surface 103 of the discs 3 may result in a gradual reduction in the thickness of these components, also owing to periodic grinding operations, the same discs 3 may be periodically replaced with new discs, by means of a simple and rapid operation.

## Claims

1. Method for fixing precisely with adhesive, on a preparation and support plate or base (1), workpieces (P) to be machined by machine tools and for subsequent simplified separation of the said workpieces, **characterized in that** the surface for resting and supporting the workpiece (P) is formed by the flat top surface (103) of an annular arrangement of small supports (3) which are positioned with their axes (A) parallel in relation to that of the said base (1), on which the said workpiece must be placed and which is designed to be gripped by the chuck of the machine tool, the said supports (3) being mounted on the said base (1) with the possibility of being operated so as to rotate about their axes, it being envisaged that a suitable amount of adhesive is arranged on the top surface (103) of these supports and the workpiece whose visible surfaces are to be machined is then placed and correctly centred on the said surface, all of which so that, after machining of this workpiece, it may be separated from the said supports (3) by imparting to the latter a small rotation about their axes (A) so as to break the bond of the adhesive surface situated in between, without the workpiece itself being subject to damaging stresses.

2. Apparatus for fixing precisely with adhesive, on a preparation and support plate or base (1), workpieces (P) to be machined by machine tools and for subsequent simplified separation of these workpieces, in particular for implementing the method according to Claim 1, comprising, on the said support base (1), a plurality of small supports (3), **characterized in that** the plurality of small supports (3) form an annular rim with a diameter correlated to that of the workpiece (P) and coaxial with the said base (1) and are designed to be operated so as to rotate about their axes (A) parallel to that of the said base (1) and, with their visible surface (103), form an annular, flat, support surface which is perfectly perpendicular to the axis of the said support base (1).

3. Apparatus according to Claim 2, **characterized in that** it envisages the use of a table (2) rotatable about its vertical axis (Y), with manual or mechanically operated rotation, and provided with self-centring gripping jaws (102) for gripping the said support base (1), all of which so as to be able to use rotation of this table in order to position in succession the supports (3) of the said base (1) in relation to one or more fixed rotating stations (Z), one or more fixed stations for cleaning the said supports and one or more fixed stations for the metered distribution, on the said supports (3), of the adhesive for fixing the workpiece (P) thereon.

4. Apparatus according to claim 3, in which the support base (1) or the table (2) are designed for being able to mount thereon reference gauges (R) which allow the correct centring of the workpiece (P) on the supports (3) previously provided with the appropriate amount of adhesive.

5. Apparatus according to Claim 2, in which the supports (3) may be rotatably mounted in holes pre-formed in the support base (1) so as to form with their top surface (103) an annular surface with a diameter correlated to that of the workpiece (P), which is concentric with and perpendicular to the axis of the said support base (1), the said supports (3) being **characterized in that** they have, underneath their head (103), a configuration in the form of a cube or with at least two parallel surfaces, so as to be able, where necessary, to be gripped and rotated about their axes, using an open-ended spanner of adequate length.

6. Apparatus according to Claim 2, in which the support surface (103) of the supports (3) is such as not to project from the plan-view volume of the workpiece (P) so that the said workpiece may be precisely machined over the entire visible surface, without interference with the said supports (3).

7. Apparatus according to Claim 2, in which the supports (3) are each formed by the output shaft of a small reduction unit (10) which comprises worm screw (4) and helical gear (5) and which is fixed with its body (210) on a slide (6) which slides precisely inside straight guides (106) arranged radially on the support base (1) and which may be slid or locked inside these guides by means of a system comprising screw nut (107), situated inside the slide (6), and screw (7), arranged in a parallel manner inside the said guides (106), rotatably supported by the base (1) and provided at its end with a head (207) for connection to rotating means.

8. Apparatus according to Claim 7, in which the support base (1) may be provided with metric scales with which the reference gauges fixed to the said slides (6) or to the body of the reduction unit (10) mounted on the latter co-operate, in order to display the radial position of the various reduction units with the associated rotating supports (3).

9. Apparatus according to Claim 7, in which each support (3) is formed by a disc of suitable thickness with a shape, in plan view, in the form of a circle segment, which by means of screws (8) and a centring pin (9) is removably and interchangeably fixed on the top end of a hollow shaft (11) which is able to rotate precisely and with a low coefficient of friction inside a bush (12) or other suitable means positioned in a seat of the cover (110) of the reduction unit (10), this hollow shaft (11) projecting with a short section from the bottom of the said bush (12) so as to be able to mount thereon a ring (112) with a low coefficient of friction, which rests on the bottom end of the said bush (12) and against which the helical gear (5) of the reduction unit is pressed by means of screws (13) which fix it to the said hollow shaft (11).

10. Apparatus according to Claim 9, in which the helical gear (5) is also axially hollow so that, when the said upper disc is not present, it is possible to engage a spanner with the socket head of a screw (14) which passes through a hole provided in the bottom of the body (210) of the reduction unit and which is screwed into a hole of a securing plug (15) housed in the widened base of a guide groove (16) which has the form of an overturned T and is formed in the said slide (6) and which at the top is engaged by a linear, bottom, raised part (310) of the body of the reduction unit (10).

## Patentansprüche

1. Verfahren zum präzisen Festlegen von durch Werkzeugmaschinen zu bearbeitenden Werkstücken (P) mittels Klebstoff an einer Verbindungs- und Stützplatte oder -basis und zur nachfolgenden vereinfachten Entfernung der Werkstücke, **dadurch gekennzeichnet, dass** die Fläche zum Auflagern und Abstützen des Werkstückes (P) durch die flache obere Fläche (103) einer ringförmigen Anordnung kleiner Stützen (3) gebildet wird, die mit ihren Achsen (A) parallel in Bezug auf die Basis (1) angeordnet sind, auf welcher das Werkstück angeordnet werden muss und welche derart konstruiert ist, dass sie durch das Spannfutter der Werkzeugmaschine greifbar ist, wobei die Stützen (3) mit der Möglichkeit, derart betätigt zu werden, dass sie um ihren Achsen rotieren, auf der Basis montiert sind, und es angestrebt wird, dass ein geeignete Menge an Klebstoff auf der oberen Fläche (103) dieser Stützen angeordnet wird und das Werkstück, dessen sichtbare Flächen zu bearbeiten sind, dann auf der Fläche angeordnet und korrekt zentriert wird, all das so, dass nach dem Bearbeiten des Werkstückes dieses von den Stützen (3) **dadurch** getrennt wird, dass letzteren eine kleine Rotation um ihre Achse (A) gegeben wird, um die Bindung der zwischenliegenden Klebefläche zu brechen, ohne dass das Werkstück selbst Gegenstand schädigender Belastungen ist.

2. Vorrichtung zum präzisen Festlegen von durch Werkzeugmaschinen zu bearbeitenden Werkstücken (P) mittels Klebstoff an einer Vorbereitungs- und Stützplatte oder - basis (1) und zum nachfolgenden vereinfachten Entfernen dieser Werkstücke, insbesondere zur Durchführung des Verfahrens nach Anspruch 1, die auf der Stützbasis (1) eine Mehrzahl kleiner Stützen (3) aufweist, **dadurch gekennzeichnet, dass** die Vielzahl an kleinen Stützen (3) einen ringförmigen Kranz mit einem Durchmesser entsprechend demjenigen des Werkstücken (P) bildet und koaxial zu der Basis (1) liegt und diese konstruiert sind, um derart betätigt zu werden, dass sie um ihre Achsen (A) parallel zu der Basis (1) rotieren und mit ihren sichtbaren Flächen (103) eine ringförmige, flache Stützfläche bilden, die exakt senkrecht zu der Achse der Stützbasis (1) liegt.

3. Vorrichtung nach Anspruch 2, **dadurch gekennzeichnet, dass** der Einsatz eines mit manuell oder mechanisch betätigter Rotation um seine Vertikalachse (Y) drehbaren Tisches (2) vorgesehen ist, der mit selbstzentrierenden Greifbacken (102) zum Greifen der Stützbasis (1) vorgesehen ist, all das derart, dass man in der Lage ist, die Drehbewegung dieses Tisches einzusetzen, um in Abfolge die Stützen (3) der Basis (1) in Bezug auf eine oder mehrere feststehende Drehstationen (Z) zu positionieren, wobei eine oder mehrere feststehende Stationen zum Reinigen der Stützen und eine oder mehrere feststehende Stationen für die abgemessene Verteilung von Klebstoff auf den Stützen (3) zum Festlegen des Werkstückes (P) darauf dienen.

4. Vorrichtung nach Anspruch 3, bei welcher die Stützbasis (1) oder der Tisch (2) so gestaltet sind, dass daran Bezugslehren (R) montierbar sind, die das korrekte Zentrieren des Werkstückes (P) auf den Stützen (3) erlaubt, die zuvor mit der geeigneten Menge an Klebstoff versehen worden sind.

5. Vorrichtung nach Anspruch 2, bei welcher die Stützen (3) in in der Stützbasis (1) vorgeformten Löchern drehbar montiert werden können, so dass sie mit ihren oberen Flächen (103) eine ringförmige Fläche mit einem Durchmesser bilden, der mit demjenigen des Werkstückes (P) korreliert, die konzentrisch und senkrecht zu der Achse der Stützbasis (1) liegt, wobei die Stützen (3) **dadurch gekennzeichnet sind, dass** sie unterhalb ihres Kopfes (103) eine Ausbildung in der Form eines Würfels oder wenigstens zweier Parallelflächen haben, damit diese, falls notwendig, gegriffen und unter Verwendung eines Gabelschlüssels geeigneter Länge um ihre Achsen drehbar sind.

6. Vorrichtung nach Anspruch 2, bei welcher die Stützfläche (103) der Stützen (3) derart ausgebildet ist, dass sie nicht über das Draufsichtvolumen des Werkstückes (P) hervorstehen, so dass das Werkstück über die gesamte sichtbare Oberfläche ohne eine Störung durch die Stützen (3) präzise bearbeitet werden kann.

7. Vorrichtung nach Anspruch 2, bei welcher die Stützen (3) jeweils durch die Abtriebswelle einer kleinen Untersetzungseinheit (10) gebildet sind, die ein Schneckenrad (4) und ein Schrägzahnrad (5) aufweist und mit ihrem Gehäuse (210) auf einem Gleiter (6) montiert ist, der präzise in geraden Führungen (106) gleitet, die radial auf der Stützbasis (1) angeordnet sind und in diesen Führungen verschoben oder mittels eines Systems verriegelt werden können, das eine Mutter (107), die innerhalb des Gleiters (6) angeordnet ist und eine Schraube (7) aufweist, die in einer parallelen Ausrichtung innerhalb der Führungen (106) angeordnet ist, drehbar durch die Basis (1) gehalten ist und an ihrem Ende mit einem Kopf (207) für eine Verbindung mit Rotationsmitteln versehen ist.

8. Vorrichtung nach Anspruch 7, bei welcher die Stützbasis (1) mit metrischen Skalen versehbar ist, mit welchen die Referenzlehren, die an den Gleitern (6) oder dem Gehäuse der Untersetzungseinheit (10), die an letzteren montiert ist, befestigt sind, zusammenwirken, um die Radialstellung der verschiedenen Untersetzungseinheiten mit den zugeordneten rotierenden Stützen (3) anzuzeigen.

9. Vorrichtung nach Anspruch 7, bei welcher jede Stütze (3) durch eine Scheibe von geeigneter Dicke mit in Draufsicht einer Formgebung in der Form eines Kreissegments gebildet ist, die mittels Schrauben (8) und einem Zentrierstift (9) entfernbar und austauschbar an dem oberen Ende einer Hohlwelle (11) befestigt ist, die in der Lage ist genau und mit einem niedrigen Reibkoeffizienten innerhalb einer Buchse (12) oder anderen geeigneten Mitteln, die in einem Sitz der Abdeckung (110) der Untersetzungseinheit (10) angeordnet sind, zu rotieren, wobei diese Hohlwelle (11) mit einem kurzen Abschnitt aus dem Boden der Buchse (12) hervorragt, so dass es ermöglicht ist, daran einen Ring (112) mit einem niedrigen Reibkoeffizienten zu montieren, der auf dem Bodenende der Buchse (12) ruht und gegen welchen das Schrägzahnrad (5) der Untersetzungseinheit mittels Schrauben (13) gedrückt wird, welche es an der Hohlwelle (11) festlegen.

10. Vorrichtung nach Anspruch 9, bei welcher das Schrägzahnrad (5) ebenfalls axial hohl ist, so dass dann, wenn die obere Scheibe nicht vorhanden ist, es möglich ist, einen Schlüssel mit dem Mehrkantkopf einer Schraube (14) in Eingriff zu bringen, die durch ein Loch ragt, das im Boden des Gehäuses (210) der Untersetzungseinheit vorgesehen ist, und die in ein Loch eines Sicherungsstopfens (15) eingeschraubt ist, der in der erweiterten Basis einer Führungsnut (16) aufgenommen ist, die die Form eines umgedrehten T besitzt und in dem Schlitten (6) ausgebildet ist und in welchen an der Spitze ein linearer, vom Boden abgehobener Teil (310) des Gehäuses der Untersetzungseinheit (10) eingreift.

## Revendications

1. Procédé pour la fixation précise avec de l'adhésif, sur une plaque ou une base (1) de préparation et d'appui, de pièces (P) à usiner par des machines-outils, et pour la séparation simplifiée ultérieure de ces pièces, **caractérisé en ce que** la surface de repos et d'appui de la pièce (P) est formée par la surface supérieure plate (103) d'un agencement annulaire de petits appuis (3) dont les axes (A) sont positionnés parallèlement à celui de la base (1), sur laquelle la pièce doit être placée et qui est conçue pour être saisie par le mandrin de la machine-outil, les appuis (3) étant montés sur la base (1) avec la possibilité d'être actionnés de manière à tourner autour de leurs axes, sachant qu'il est prévu qu'une quantité adaptée d'adhésif est disposée sur la surface supérieure (103) de ces appuis et que la pièce, dont les surfaces visibles doivent être usinées, est ensuite placée et centrée correctement sur cette surface, tout cela étant prévu de telle sorte qu'à l'issue de l'usinage de cette pièce, la pièce peut être séparée des appuis (3) en imprimant à ceux-ci une petite rotation autour de leurs axes (A), de manière à briser l'adhérence de la surface d'adhésif située entre eux sans soumettre la pièce elle-même à des contraintes dommageables.

2. Appareil pour la fixation précise avec de l'adhésif, sur une plaque ou une base (1) de préparation et d'appui, de pièces (P) à usiner par des machines-outils, et pour la séparation simplifiée ultérieure de ces pièces, en particulier pour la mise en oeuvre du procédé selon la revendication 1, comprenant une pluralité de petits appuis (3) sur la base d'appui (1), **caractérisé en ce que** la pluralité de petits appuis (3) forme un rebord annulaire dont le diamètre est corrélé à celui de la pièce (P) et qui est coaxial à la base (1), et les appuis (3) sont conçus pour être actionnés de manière à tourner autour de leurs axes (A) parallèles à celui de la base (1) et ils forment, par leur surface visible (103), une surface d'appui annulaire plate qui est exactement perpendiculaire à l'axe de la base d'appui (1).

3. Appareil selon la revendication 2, **caractérisé en ce qu'**il prévoit l'utilisation d'un plateau (2) rotatif autour de son axe vertical (Y), par rotation à actionnement manuel ou mécanique, et pourvu de mâchoires de préhension (102) à centrage automatique pour saisir la base d'appui (1), tout cela étant prévu de manière à pouvoir utiliser la rotation de ce plateau pour positionner successivement les appuis (3) de la base (1) par rapport à un ou plusieurs postes rotatifs (Z) situés en des emplacements fixes, à savoir un ou plusieurs postes pour nettoyer les appuis et un ou plusieurs postes pour la distribution dosée, sur les appuis (3), de l'adhésif destiné à fixer la pièce (P) sur ces appuis.

4. Appareil selon la revendication 3, **caractérisé en ce que** la base d'appui (1) ou le plateau (2) est conçu(e) de manière à pouvoir y monter des jauges de référence (R) qui permettent le centrage correct de la pièce (P) sur les appuis (3) préalablement pourvus de la quantité appropriée d'adhésif.

5. Appareil selon la revendication 2, dans lequel les appuis (3) peuvent être montés à rotation dans des trous préformés dans la base d'appui (1), de manière à former par leur surface supérieure (103) une surface annulaire ayant un diamètre corrélé à celui de la pièce (P), surface qui est concentrique et perpendiculaire à l'axe de la base d'appui (1), les appuis (3) étant **caractérisés en ce qu'**ils possèdent, en dessous de leur tête (103), une configuration sous la forme d'un cube ou avec au moins deux surfaces parallèles, de manière à pouvoir, lorsque cela est nécessaire, être saisis et tournés autour de leurs axes en utilisant une clé plate de longueur adaptée.

6. Appareil selon la revendication 2, **caractérisé en ce que** la surface d'appui (103) des appuis (3) est conçue de manière à ne pas dépasser du volume en vue en plan de la pièce (P), de sorte que la pièce peut être usinée avec précision sur toute sa surface visible sans interférence avec les appuis (3).

7. Appareil selon la revendication 2, **caractérisé en ce que** les appuis (3) sont formés chacun par l'arbre de sortie d'un petit réducteur (10) qui comprend une vis sans fin (4) et une roue hélicoïdale (5) et qui est fixé par son corps (210) sur un coulisseau (6), lequel coulisse avec précision à l'intérieur de guides rectilignes (106) disposés radialement sur la base d'appui (1), et lequel peut être coulissé ou bloqué dans ces guides au moyen d'un système comprenant un écrou de vis (107) disposé à l'intérieur du coulisseau (6) et une vis (7) disposée de manière parallèle à l'intérieur des guides (106), supportée à rotation par la base (1) et pourvue à son extrémité d'une tête (207) pour la liaison à un moyen de rotation.

8. Appareil selon la revendication 7, **caractérisé en ce que** la base d'appui (1) peut être pourvue de graduations métriques avec lesquelles coopèrent les jauges de référence fixées sur les coulisseaux (6) ou sur le corps du réducteur (10) monté sur ces coulisseaux, afin d'afficher la position radiale des différents réducteurs avec les appuis rotatifs associés (3).

9. Appareil selon la revendication 7, **caractérisé en ce que** chaque appui (3) est formé par un disque d'épaisseur appropriée ayant en vue en plan la forme d'un segment de cercle, disque qui, au moyen de vis (8) et d'une broche de centrage (9), est fixé de manière amovible et interchangeable à l'extrémité supérieure d'un arbre creux (11) qui peut tourner avec précision et avec un faible coefficient de frottement à l'intérieur d'une douille (12) ou d'un autre moyen approprié positionné dans un logement du couvercle (110) du réducteur (10), cet arbre creux (11) faisant saillie du fond de la douille (12) par une courte partie, de manière à pouvoir monter sur cet arbre une bague (112) ayant un faible coefficient de frottement, qui repose sur l'extrémité de fond de la douille (12) et contre laquelle la roue hélicoïdale (5) du réducteur (10) est pressée au moyen de vis (13) qui la fixent à l'arbre creux (11).

10. Appareil selon la revendication 9**, caractérisé en ce que** la roue hélicoïdale (5) est également axialement creuse, de sorte que, lorsque le disque supérieur n'est pas présent, il est possible d'engager une clé dans la tête creuse d'une vis (14) qui traverse un trou prévu dans le fond du corps (210) du réducteur et qui est vissée dans un trou d'un bouchon d'assujettissement (15) logé dans la base élargie d'une rainure de guidage (16) qui possède la forme d'un T retourné et est formée dans le coulisseau (6), et qui est engagée sur le dessus par une partie de fond rehaussée linéaire (310) du corps du réducteur (10).
